# EUROPEAN PATENT SPECIFICATION

(11) **EP 0 793 077 B1**
(45) Date of publication and mention of the grant of the patent: **12.09.2001**
(21) Application number: 97301313.9
(22) Date of filing: 27.02.1997
(51) Int. Cl.: G01D 5/244, G01R 19/00

(54) **Position dectector circuit for an electric motor**
Positionsgeberschaltung für einen elektrischen Motor
Circuit pour la détection de la position d'un moteur électrique

(30) Priority: 29.02.1996 GB 9604274; 01.10.1996 GB 9620424
(43) Date of publication of application: 03.09.1997
(73) Proprietor: KELSEY-HAYES COMPANY, Livonia, MI 48150 (US)
(72) Inventor: Wilke, Robert A., Winona, Minnesota 55987 (US); Wiechmann, David P., Winona, Minnesota 55987 (US)
(74) Representative: Hackett, Sean James

(56) References cited:
- EP-A- 0 381 643
- EP-A- 0 393 847
- US-A- 3 346 725

## Description

This invention relates to a motor control circuit in which there is means for providing an indication of the angular position of the output shaft of a commutator type DC electric motor.

One application for such a motor is in the control and positioning mechanism of a fluid flow control valve in particular a flap in an air conditioning unit for a vehicle. In this instance the flap controls the flow of air along a duct. Modern vehicle air conditioning units are microprocessor controlled and for satisfactory operation it is necessary to be able to position the flap at a predetermined position. In order to check that the flap has assumed the desired position after a signalled change of position it is known to utilize a sensor. In the practical arrangement the output shaft of the motor is coupled to or forms the input shaft of a reduction gear box the output shaft of which is coupled to the flap through a linkage. Whilst it would be possible to mount the sensor on the axle of the flap in practice the sensor is mounted on the output shaft of the gear box and the sensor comprises a simple potentiometer having a slider movable over a resistive track. Such a sensor requires three electrical connections so that for the complete installation five electrical connections are required. The provision of the sensor adds to the cost and bulk of the motor and gear box assembly besides the need to provide additional electrical connections and the associated wiring. Moreover such sensors are not noted for their reliability over an extended period of use.

GB-A-2186377 describes a commutator type electric motor in which one segment of the commutator is electrically connected to the output shaft of the motor. This allows a signal to be obtained which represents the voltage variation experienced by that segment as the armature of the motor rotates. From this signal can be obtained a pulse train in which the number of pulses per revolution of the armature depends upon the number of commutator segments. In order to extract the signal the shaft is electrically connected to the motor casing which may have to be insulated from the associated support structure.

It is therefore necessary with the above described arrangement to modify the construction of the motor as compared with a standard motor and it may be necessary to provide a special mounting arrangement.

The motor as described in GB-A-2186377 could be used for positioning the flap in the air conditioning unit described above but additional electrical connections beyond the two power supply connections would be required as in the known arrangement.

Furthermore, it has already been proposed, for example in US Patents Nos. 5132602 and 4463426, to use a current transformer with its primary winding in series with the motor and to detect in the waveform obtained from the transformer secondary winding, pulses indicative of the position of the motor shaft.

The use of a current transformer or other d.c. blocking arrangement is considered to be disadvantageous as it compromises either d.c. transient response or low frequency detection performance. Moreover any additional circuit component connected in series with the motor will either reduce the torque/speed performance of the motor or require the detector circuit to be a.c. coupled.

Where the switching on and off of motor current is controlled by solid state switches it is possible to detect instantaneous motor current directly either by detecting the voltage across the armature terminals, the saturation voltage of the switches being dependent on the current flowing, or by including a current monitoring arrangement in the drive circuit. The former detection method gives a voltage which varies non-linearly with motor current, whereas the latter gives a voltage signal which varies linearly with motor current.

When motor current is detected directly by either of these methods and shaft position detection is based on transitions of the detection voltage through a predetermined threshold, it is found that the number of transitions per rotation varies in accordance with load. In the case of a d.c. motor with three commutator segments, there may be three pulses per revolution detected at very light loads, but six pulses per revolution at heavy loads. Over an intermediate load range there may be nine pulses per cycle. These varying rates of pulse output make it difficult to determine the shaft position.

It has been found that the current dependent voltage waveform contains three basic components. Firstly there is a first component which has a frequency of six cycles per shaft revolution. The amplitude of this decreases from a maximum at high load to a minimum at no load. A second component has a frequency of only three cycles per shaft revolution and its amplitude increases from a minimum at high load to a maximum at no load. Finally, there is a third component which is a d.c. transient signal which arises from the motor being started and stopped.

It has been found that the first signal component referred to above is rich in high order harmonics, whereas the second signal component is relatively smooth and lacking in high frequency harmonics.

The object of the present invention is to simplify the detection of the shaft position and this object is achieved by filtering out frequencies below an upper limit level, so that the effect of the second signal component referred to above is partially or completely eliminated.

Where substantially complete elimination of the second signal component is achieved, the first signal component will be dominant over the entire load range. Where only partial, but nonetheless satisfactory, elimination of the second signal component is achieved, there will be a part of the load range where two pulses per commutator segment are produced and a part where three pulses per segment are produced. It is a relatively simple matter for a digital processor to recognise the additional pulses in the latter case and ignore them when computing shaft position.

Accordingly, the present invention provides a commutator-type d.c. motor control circuit incorporating motor current detection means for deriving a voltage signal dependent on the instantaneous current flowing in the motor, an active d.c. cancelling and filter circuit to which said voltage signal is supplied as input, said d.c. cancelling and filter circuit providing an output signal attenuated at frequencies below an upper limit level and a pulse generator circuit driven by the output of said d.c. cancelling and filter circuit.

According to another aspect of the present invention there is provided an apparatus for actuating a fluid flow control valve comprising the combination of a control circuit as defined above with a commutator-type d.c. motor having an output shaft, a reduction gearbox having an input member connected to said motor output shaft and an output member connected to said fluid control valve, and signal processing means connected to said pulse generator circuit and operating to receive signals from said pulse generator circuit and provide an indication of the position of the valve

In the accompanying drawings:
Figure 1 is a block diagram of one example of a motor control circuit in accordance with the invention;
Figure 2 is a block diagram of a modification of the arrangement shown in Figure 1;
Figure 3 is a oscillogram showing the output of motor current detection means included in either Figure 1 or Figure 2;
Figure 4 is a circuit diagram of a detector circuit included in Figures 1 and 2; and
Figure 5 is a diagram showing the use of a motor with a control circuit as shown in Figure 1 for actuating a flap valve in a vehicle air conditioning system.

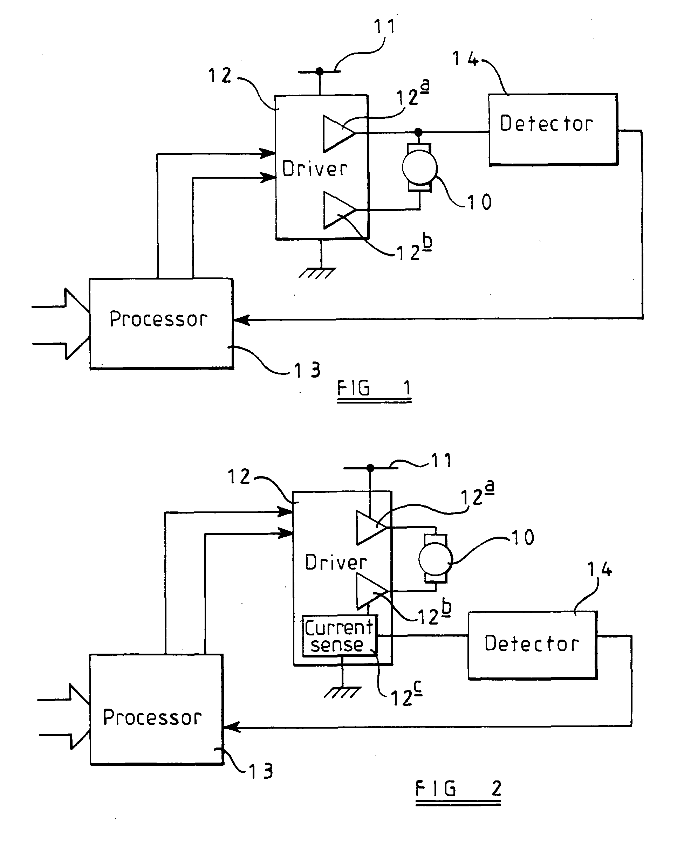

Referring firstly to Figure 1, the motor 10 is connected to be driven from a power supply rail 11 by a solid-state driver circuit including a pair of push-pull output stages 12a and 12b so that the motor can be powered to run in either direction in accordance with signals received from a digital processor 13. Since the output stages include output transistors or field effect transistors each has an effective output impedance so that there will be a small voltage drop across each. This voltage drop is variable non-linearly with the motor current and hence, the voltage at either of the motor terminals will vary in accordance with the current flowing. Accordingly, one driver output stage can be used as a voltage detector providing a voltage signal which varies in accordance with the motor current. This voltage signal is applied to a detector circuit 14 which detects pulses in the voltage created by discontinuities in the current flow in the motor. The detector produces output pulses which are supplied to the processor 13 to provide data relating to displacement of the motor shaft.

In the alternative arrangement shown in Figure 2, the driver circuit has an independent output derived from a current monitoring circuit. Specifically, the output stage of the driver circuit makes use of HEXFET devices of known configuration in which each device includes a plurality of fet cells which share the load current between them and a sensor terminal connected to an isolated metalization region covering the source regions of a few selected ones of the cells. This arrangement enables the total combined drain current of the whole array of cells to be determined accurately and without any lag, in a substantially lossless manner. The voltage output at the sensor terminal is linearly related to the motor current.

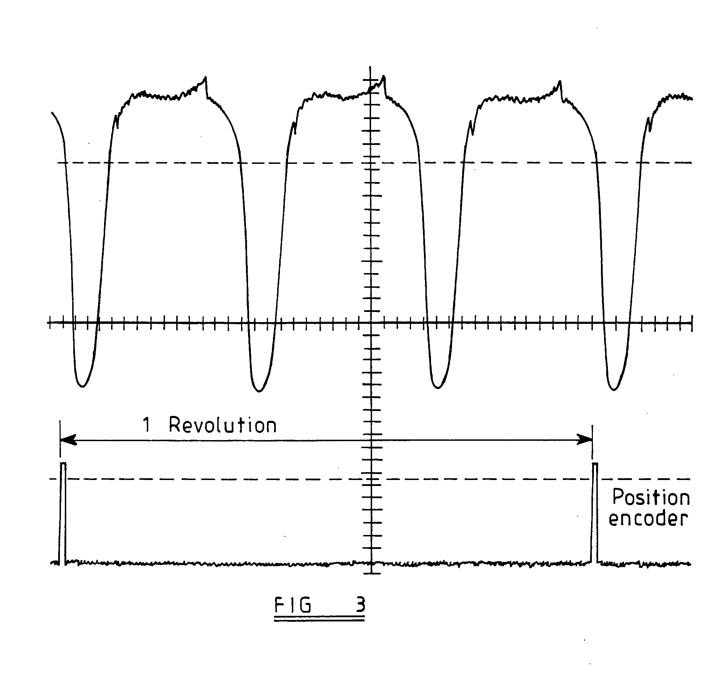

Figure 3 shows the waveform of the voltage signal derived as shown in either of Figures 1 and 2. The waveform is that which applies when the motor is running at a relatively low load. It will be noted that there are three relatively deep troughs in the waveform during each revolution (the motor having two brushes and a three segment commutator). The depth of these troughs varies according to load. At high load the troughs are of very small amplitude, but at no load they are very deep. The crests of the waveform show two peaks each. The amplitude of the component of the waveform which creates these peaks is least at no load and greatest at full load. The trough waveform component is smooth and contains few high order harmonics. The twin-peaked waveform component, on the other hand, is rich in high order harmonics.

What is not shown in Figure 3 is the shift of the overall d.c. level with load, which occurs transiently when the motor is started and stopped as a result of inertial loading.

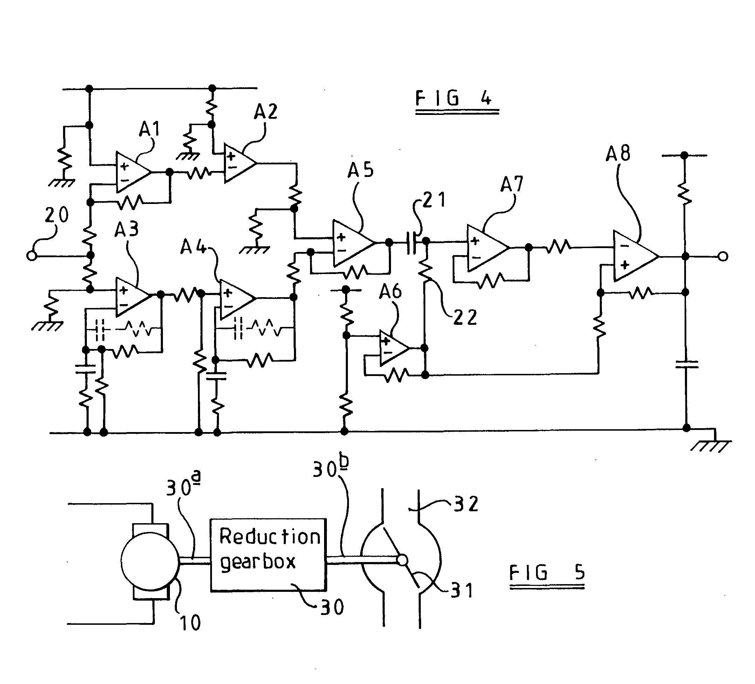

The detector circuit shown in Figure 4 includes an input terminal 20 directly d.c. coupled to the current dependent voltage signal terminal, be it the actual motor terminal as in Figure 1 or the current mirror output terminal as in Figure 2.

The signal at terminal 20 is split into two paths. One path includes a d.c. level shifter and scaler based on two operational amplifiers A1 and A2. The other path provides similar level shifting and scaling functions, but also acts as a two stage low pass filter (as described hereinafter). It is based on two operational amplifiers A3 and A4. The outputs from the two paths are combined by a difference amplifier A5 so that transient d.c. shifts in the input signal and frequencies below an upper limit level are cancelled. This upper limit level is selected so that the trough component of the waveform is removed leaving the upper harmonics of the double-peaked waveform component intact. The filter characteristics of the second path is obtained by providing unity gain up to a first zero frequency, followed by amplification above that zero frequency.

A capacitor 21 is used to connect the output of the amplifier A5 to the input of a buffer amplifier A7 and a resistor 22 connects the output of a reference level amplifier A6 to the same input of amplifier A7. A further amplifier or comparator A8 connected as a Schmitt trigger circuit receives the outputs of amplifiers A6 and A7 at its inputs and provides an output pulse for each peak in the twin peaked waveform component.

In use, the detector circuit provides position feedback to the processor 13 so that it can stop the motor when a desired position is reached. The motor control is particularly useful for use in motor vehicle processor controlled devices such as motorised mixing flaps in air conditioning systems, but many other uses are envisaged.

The embodiment described above makes use of a circuit acting as a low pass filter in the second path. It should be noted that where the additional components shown associated with amplifiers A3 and A4 are included, the filter will have a band stop characteristic which will give the overall scaling and filtering circuit a band pass characteristic. Removal of very high frequency noise helps eliminate spurious triggering of the trigger circuit by noise and interference pulses, which may occur because of the direct d.c. coupling of the detector circuit to the motor terminal.

The filter circuit shown in Figure 4 has a fixed characteristic but it may have adjustable components variable under the control of the processor to raise and lower the filter cut off point according to motor speed.

However, it has been found that a fixed frequency cut off point set at about 12 times the maximum motor speed is adequate over a wide range of supply voltages and loads. For example a fixed filter with zero points at 1000Hz and 500KHz and poles at 20KHz and 25KHz has operated satisfactorily to detect the pulses at six pulses per revolution using a Mabuchi type RF370CM-11670 motor with supply voltages varying between 9 and 16 volts. The Schmitt trigger was set to require an input voltage change representing a motor current change of 26mA.

Manufacturing tolerances may be such that, in some load/speed conditions, the effect of the trough component of the waveform is not entirely eliminated and nine pulses are sometimes produced in a revolution. The software of the processor 13 can readily be designed to ignore the three additional pulses which will occur between alternate pulses in the normal six pulse per revolution pulse train from the detector.

A simple voltage comparator or a voltage window detector of known configuration may be used instead of the Schmitt trigger circuit described above.

Figure 5 shows the application of a motor which has a control circuit as described above in combination with a reduction gearbox 30 and a flap valve 31, 32 which is used as a flow control valve in a vehicle air conditioning system. The shaft of motor 10 is connected to the input member 30a of the gearbox and the output member 30b of the gearbox is connected to an angularly movable flap 31 in an air duct 32. The processor 13 of the control circuit is programmed to receive a flap position demand signal as a main control input. The processor receives pulses from the pulse generator circuit of the detector 14 and increments or decrements a position count according to the direction in which the motor is being driven. The position count is compared by the processor with the flap position demand signal and controls the supply of drive current to the motor in accordance with the difference.

In alternative embodiments of the invention, not shown in the drawings, the functions of the detector circuit shown in Figure 4 may all be carried out by a digital signal processor programmed with appropriate software.

## Claims

1. A motor control circuit for a d.c. commutator type motor comprising motor current detection means for deriving a voltage signal dependent on the instantaneous current flowing in the motor (10) and a detector circuit (14) for deriving from said voltage signal position signals based on operation of the motor commutator, **characterised in that** said detector comprises a d.c. cancelling and filter circuit (A1 to A5) which provides an output signal attenuated at frequencies below an upper limit level and a pulse generator circuit (A6, A7, A8) driven by the output of said d.c. cancelling and filter circuit.

2. A circuit as claimed in claim 1, in which said d.c. cancelling and filter circuit comprises first and second signal paths; said first signal path (A1, A2) providing a wide band output which is d.c. shifted and scaled; and said second path (A3, A4) providing an output similarly d.c. shifted and scaled, but with high frequency components above said upper frequency limit amplified; and combining means (A5) for combining output signals from said two paths so as substantially to eliminate d.c. and low frequency components from the combined signal.

3. A circuit as claimed in claim 2, in which said second path includes a two stage filter.

4. A circuit as claimed in any preceding claims, in which said pulse generator comprises a Schmitt trigger circuit (A8).

5. A circuit as claimed in any of claims 1 to 3, in which said pulse generator comprises a voltage window detector.

6. A circuit as claimed in any preceding claim, further comprising a solid-state driver circuit (12) for the motor, the output stage (12a) of such driver circuit forming said current detection means.

7. A circuit as claimed in any one of claims 1 to 5, further comprising a solid-state driver means, said current detection means being a current monitoring circuit incorporated in said driver means.

8. A circuit as claimed in any preceding claim in which said d.c. cancelling and filter circuit comprises a d.c. level shifting, scaling and filtering circuit.

9. A circuit as claimed in claim 8 in which said d.c. level shifting, scaling and filter circuit has a variable filter zero frequency and means (13) are provided for varying such cut-off point in accordance with motor speed.

10. A circuit as claimed in any preceding claim, further comprising a digital processor (13) which controls the supply of current in the motor and receives pulses from said pulse generator circuit (A6, A7 and A8) said processor being programmed to ignore additional pulses from said pulse generator occurring between alternate pulses occurring at a rate of two per commutator segment.

11. A motor control circuit as claimed in claim 1, in which said detector circuit is in the form of a digital signal processor programmed with software to carry out the functions of the d.c. cancelling and filter circuit and of the pulse generator circuit.

12. An apparatus for actuating a fluid flow control valve comprising the combination of a control circuit as claimed in any preceding claim with a commutator-type d.c. motor (10) having an output shaft, a reduction gearbox (30) having an input member (30a) connected to said motor output shaft and an output member (30b) connected to said fluid control valve (31,32), and signal processing means connected to said pulse generator circuit and operating to receive signals from said pulse generator circuit and provide an indication of the position of the valve.

## Patentansprüche

1. Motorsteuerschaltung für einen GS-Motor vom Kommutatortyp, aufweisend Motorstrom-Erfassungsmittel zum Ableiten eines Spannungssignals, das von dem in dem Motor (10) fließenden Momentanstrom abhängig ist, und eine Erfassungsschaltung (14) zum Ableiten von Positionssignalen, die auf dem Betrieb des Motorkommutators basieren, von dem Spannungssignal, **dadurch gekennzeichnet, daß** die Erfassungsschaltung eine GS-Unterdrückungs- und Filterschaltung (A1 bis A5) aufweist, die ein Ausgangssignal liefert, das bei Frequenzen unter einem oberen Grenzniveau gedämpft ist, und eine Impulsgeneratorschaltung (A6, A7, A8) aufweist, die durch das Ausgangssignal der GS-Unterdrückungs- und Filterschaltung gesteuert wird.

2. Schaltung wie in Anspruch 1 beansprucht, wobei die GS-Unterdrückungs- und Filterschaltung einen ersten und einen zweiten Signalpfad aufweist; wobei der erste Signalpfad (A1, A2) ein Breitband-Ausgangssignal liefert, das GS-verschoben und skaliert ist; und der zweite Pfad (A3, A4) ein Ausgangssignal liefert, das in gleicher Weise GS-verschoben und skaliert ist, aber bei dem Hochfrequenzkomponenten über der oberen Frequenzgrenze verstärkt sind; und Kombinationsmittel (A5) aufweist, um die Ausgangssignale von den zwei Pfaden so zu kombinieren, daß GS- und Niederfrequenzkomponenten bei dem kombinierten Signal im wesentlichen beseitigt werden.

3. Schaltung wie in Anspruch 2 beansprucht, bei der der zweite Pfad ein Zweistufenfilter umfaßt.

4. Schaltung wie in irgendeinem vorhergehenden Anspruch beansprucht, bei der der Impulsgenerator eine Schmitt-Trigger-Schaltung (A8) aufweist.

5. Schaltung wie in irgendeinem der Ansprüche 1 bis 3 beansprucht, bei der der Impulsgenerator eine Spannungsfenster-Erfassungsschaltung aufweist.

6. Schaltung wie in irgendeinem vorhergehenden Anspruch beansprucht, die weiterhin eine Halbleiter-Treiberschaltung (12) für den Motor aufweist, wobei die Ausgangsstufe (12a) dieser Treiberschaltung das Stromerfassungsmittel bildet.

7. Schaltung wie in irgendeinem der Ansprüche 1 bis 5 beansprucht, die weiterhin ein Halbleiter-Treibermittel aufweist, wobei das Stromerfassungsmittel eine in das Treibermittel eingebaute Stromüberwachungsschaltung ist.

8. Schaltung wie in irgendeinem vorhergehenden Anspruch beansprucht, bei der die GS-Unterdrückungs- und Filterschaltung eine GS-Niveau-Verschiebungs-, Skalierungs- und Filterschaltung aufweist.

9. Schaltung wie in Anspruch 8 beansprucht, bei der die GS-Niveau-Verschiebungs-, Skalierungs- und Filterschaltung eine variable Filter-Nullfrequenz hat, und Mittel (13) vorgesehen sind, um diesen Grenzpunkt entsprechend der Motordrehzahl zu variieren.

10. Schaltung wie in irgendeinem vorhergehenden Anspruch beansprucht, die weiterhin einen digitalen Prozessor (13) aufweist, der die Stromversorgung des Motors steuert und Impulse von der Impulsgeneratorschaltung (A6, A7 und A8) erhält, wobei der Prozessor so programmiert ist, daß er zusätzliche Impulse von dem Impulsgenerator nicht beachtet, die zwischen abwechselnden Impulsen auftreten, die mit einer Häufigkeit von zwei pro Kommutatorsegment vorkommen.

11. Motorsteuerschaltung wie in Anspruch 1 beansprucht, bei der die Erfassungsschaltung die Form eines digitalen Signalprozessors hat, der mit Software programmiert ist, um die Funktionen der GS-Unterdrückungs- und Filterschaltung und der Impulsgeneratorschaltung auszuführen.

12. Vorrichtung zum Betätigen eines Fluidströmungs-Steuerventils, aufweisend eine Kombination aus einer Steuerschaltung, wie in irgendeinem vorhergehenden Anspruch beansprucht, und einem GS-Motor (10) vom Kommutatortyp, der eine Ausgangswelle hat, eine Untersetzungsgetriebebox (30), die ein mit der Motor-Ausgangswelle verbundenes Eingangselement (30a) hat, und ein mit dem Fluidsteuerventil (31, 32) verbundenes Ausgangselement (30b) hat, und Signalverarbeitungsmittel, die mit der Impulsgeneratorschaltung verbunden sind, und betriebsbereit sind, um Signale von der Impulsgeneratorschaltung zu erhalten, und eine Angabe über die Position des Ventils zu liefern.

## Revendications

1. Circuit de commande de moteur d'un moteur à collecteur à courant continu comprenant un moyen de détection du courant de moteur destiné à dériver un signal de tension dépendant du courant instantané circulant dans le moteur (10) et un circuit de détection (14) destiné à dériver dudit signal de tension des signaux de position sur la base du fonctionnement du collecteur de moteur, **caractérisé en ce que** le détecteur comprend un circuit filtrant et d'annulation de courant continu (A1 à A5) qui délivre un signal de sortie atténué aux fréquences inférieures à un niveau limite supérieur et un circuit générateur d'impulsions (A6, A7, A8) excité par la sortie dudit circuit filtrant et d'annulation de courant continu.

2. Circuit selon la revendication 1, dans lequel ledit circuit filtrant et d'annulation de courant continu comprend des premier et deuxième chemins de signal; ledit premier chemin de signal (A1, A2) délivrant une sortie à bande large dont la composante continue subit un décalage de niveau et qui est mise à l'échelle; et ledit deuxième chemin (A3, A4) délivrant une sortie dont la composante continue subit un décalage de niveau et qui est mise à l'échelle de façon similaire, mais dont les composantes à haute fréquence supérieures à ladite limite de fréquence supérieure sont amplifiées; et un moyen de combinaison (A5) destiné à combiner les signaux de sortie desdits deux chemins de façon à éliminer sensiblement les composantes à basse fréquence et continues du signal combiné.

3. Circuit selon la revendication 2, dans lequel ledit deuxième chemin comprend un filtre à deux étages.

4. Circuit selon l'une quelconque des revendications précédentes, dans lequel ledit générateur d'impulsions comprend un circuit de bascule de Schmitt (A8).

5. Circuit selon l'une quelconque des revendications 1 à 3, dans lequel ledit générateur d'impulsions comprend un détecteur à fenêtre de tension.

6. Circuit selon l'une quelconque des revendications précédentes, comprenant en outre un circuit d'attaque à semi-conducteur (12) pour le moteur, l'étage de sortie (12a) de ce circuit d'attaque formant ledit moyen de détection de courant.

7. Circuit selon l'une quelconque des revendications 1 à 5, comprenant en outre un moyen d'attaque à semi-conducteur, ledit moyen de détection de courant étant un circuit de contrôle de courant incorporé dans ledit moyen d'attaque.

8. Circuit selon l'une quelconque des revendications précédentes, dans lequel ledit circuit filtrant et d'annulation de courant continu comprend un circuit de décalage de niveau de la composante continue, de mise à l'échelle et de filtrage.

9. Circuit selon la revendication 8, dans lequel ledit circuit de décalage de niveau de la composante continue, de mise à l'échelle et de filtrage a une fréquence nulle de filtrage variable et un moyen (13) est prévu pour varier ce point de blocage selon la vitesse du moteur.

10. Circuit selon l'une quelconque des revendications précédentes, comprenant en outre un processeur numérique (13) qui commande l'alimentation en courant du moteur et reçoit les impulsions dudit circuit générateur d'impulsions (A6, A7 et A8), ledit processeur étant programmé pour ignorer les impulsions supplémentaires en provenance dudit générateur d'impulsions survenant entre des impulsions alternatives survenant à une fréquence de deux par segment de collecteur.

11. Circuit de commande de moteur selon la revendication 1, dans lequel ledit circuit de détection est sous la forme d'un traiteur de signaux numérique programmé avec un logiciel de façon à effectuer les fonctions du circuit filtrant et d'annulation de courant continu et du circuit générateur d'impulsions.

12. Dispositif destiné à actionner une vanne de commande de débit de fluide comprenant la combinaison d'un circuit de commande selon l'une quelconque des revendications précédentes avec un moteur à courant continu à collecteur (10) comportant un arbre de sortie, un réducteur (30) comportant un élément d'entrée (30a) relié audit arbre de sortie de moteur et un élément de sortie (30b) relié à ladite vanne de commande de débit de fluide (31, 32), et un moyen de traitement de signaux relié audit circuit générateur d'impulsions et fonctionnant de façon à recevoir les signaux provenant dudit circuit générateur d'impulsions et à fournir une indication de la position de la vanne.
